(19) Europäisches Patentamt
European Patent Office
Office européen des brevets

(11) Veröffentlichungsnummer: **0 445 310 A1**

(12) **EUROPÄISCHE PATENTANMELDUNG**

(21) Anmeldenummer: **90102583.3**

(51) Int. Cl.5: **G05D 23/19**, F24D 12/02

(22) Anmeldetag: **09.02.90**

(43) Veröffentlichungstag der Anmeldung:
**11.09.91 Patentblatt 91/37**

(84) Benannte Vertragsstaaten:
**AT BE CH DE DK ES FR GB GR IT LI LU NL SE**

(71) Anmelder: **Viessmann Werke GmbH & Co.**
**Postfach 10 Viessmannstrasse**
**W-3559 Allendorf (Eder)(DE)**

(72) Erfinder: **Viessmann, Hans, Dr.**
**Im Hain 24**
**W-3559 Battenberg/Eder(DE)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

(54) **Verfahren und Vorrichtung zur Regelung der Vorlauftemperatur in Mehrkessel-Heizungssystemen.**

(57) Die Erfindung betrifft ein Verfahren sowie eine Vorrichtung zur Regelung der Vorlauftemperatur in Heizungssystemen mit einer Mehrkesselanlage (1) und mehreren Heizkesseln (K1, K2, K3), die jeweils einen Kesseltemperaturfühler (F1, F2, F3), ein Ventil (D1, D2, D3) sowie eine Umwälzpumpe (P1, P2, P3) aufweisen, einem zwischen die Mehrkesselanlage (1) und die Wärmeverbraucher (WV) parallel eingeschalteten hydraulischen Endkoppler (HE) sowie einer elektronischen Regeleinrichtung (ER1, ER2), welche die der Kesseltemperatur (T1, T2, T3) entsprechenden Signale erfaßt und auf der Basis des Sollwerts der Vorlauftemperatur und dem Istwert der Vorlauftemperatur im Primärkreis bzw. Sekundärkreisdie Kesseltemperatur (T1, T2, T3) der Heizkessel (K1, K2, K3) und gegebenenfalls Stellorgane und/oder Pumpen steuert und in Abhängigkeit vom erfaßten Wärmebedarf der Wärmeverbraucher (WV) die Heizkessel (K1, K2, K3) zu- und abschaltet und deren Ventile (D1, D2, D3) und Umwälzpumpen (P1, P2, P3) steuert; die Erfindung ist dadurch gekennzeichnet, daß die Vorlauftemperatur (VT1) im Primärkreis nicht über einen Vorlauftemperaturfühler gemessen, sondern aus den Kesseltemperaturen (T1, T2, T3) nach einem mathematischen Modell berechnet und unter bestimmten Betriebsbedingungen als Istwert der Vorlauftemperatur zur Regelung verwendet wird.

Hierdurch wird ein separater Vorlauftemperaturfühler im Primärkreis eingespart.

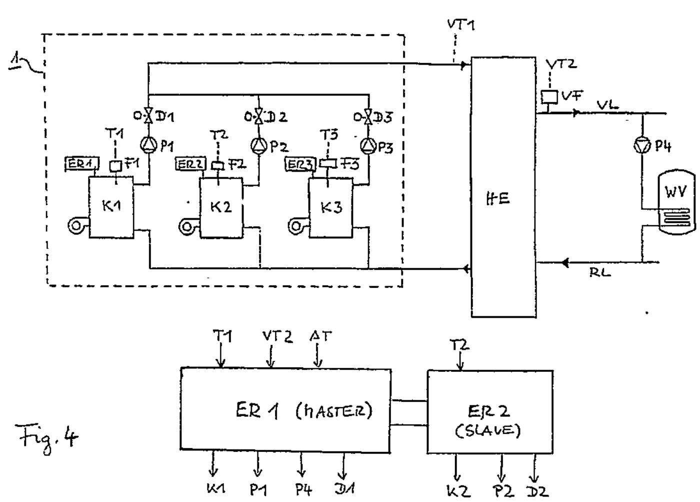


Fig. 4

EP 0 445 310 A1

# VERFAHREN UND VORRICHTUNG ZUR REGELUNG DER VORLAUFTEMPERATUR IN MEHRKESSEL-HEIZUNGSSYSTEMEN

Die Erfindung betrifft ein Verfahren sowie eine Vorrichtung zur Steuerung bzw. Regelung der Vorlauftemperatur als Regelgröße in mit einem flüssigen Wärmeträger betriebenen Heizungssystemen mit einer Mehrkesselanlage.

Bei Mehrkesselanlagen, d.h. Heizungssystemen, die mehr als einen und üblicherweise 3 bis 5 hydraulisch parallelgeschaltete, getrennt zu- und abschaltbare Heizkessel aufweisen, wird zur hydraulischen Entkopplung des Primärkreises mit den Heizkesseln und des Sekundärkreises mit den Wärmeverbrauchern ein hydraulischer Entkoppler vorgesehen, der unterschiedliche Volumenströme beider Kreise ausgleicht. Derartige hydraulische Entkoppler sind in der Regel einfache Gefäße mit zwei Einlaß- und zwei Auslaßanschlüssen, die parallel zu den Heizkesseln geschaltet sind und bei denen Einlaß und Auslaß des Primärkreises in der Nachbarschaft des Auslasses bzw. Einlasses des Sekundärkreises angeordnet sind.

Bei modernen Heizungssystemen ist der Sollwert der Vorlauftemperatur für die Wärmeverbraucher nicht konstant, sondern wird insbesondere nach der herrschenden Außentemperatur und ggfs. auch nach der angeforderten Leistung bzw. dem Durchsatz des Wärmeträgers im Sekundärkreis gesteuert.

Die Regelung der Vorlauftemperatur als Regelgröße im Sekundärkreis solcher Heizungssysteme setzt eine hinreichend genaue Erfassung des Istwerts der Vorlauftemperatur voraus.

Bei einem herkömmlichen Heizungssystem mit hydraulischem Entkoppler wird die Erfassung des Istwerts der Vorlauftemperatur im dynamischen Zustand mit einem auf der Sekundärseite des hydraulischen Entkopplers, d.h. an seinem Auslauf, welcher der Vorlaufseite des Sekundärkreises entspricht, angeordneten Vorlauftemperaturfühler vorgenommen. Da bei stagnierender Wärmeabnahme im Sekundärkreis, d.h. bei geschlossenen Ventilen und/oder abgeschalteten Umwälzpumpen sämtlicher Wärmeverbraucher wie z.B. Heizkörper, keine Umwälzung des Wärmeträgers im Sekundärkreis vorliegt, kann der Istwert der Vorlauftemperatur unter solchen Betriebsbedingungen nicht im Vorlauf des Sekundärkreises gemessen werden, da unter diesen Betriebsbedingungen z.B. ein zu hoher, apparenter Istwert erfaßt wird und somit beispielsweise die Heizkessel mit einer zu hohen Temperatur betrieben werden könnten.

Daher wird bei derartigen herkömmlichen Heizungssystemen ein zusätzlicher, zweiter Vorlauftemperaturfühler im Vorlauf des Primärkreises unmittelbar vor dem hydraulischen Entkoppler vorgesehen, wobei nach einem von sekundärseitiger Wärmeabnahme abhängigen Umschaltkriterium zwischen beiden Vorlauftemperaturfühlern umgeschaltet wird.

Der Nachteil dieser Systeme liegt darin, daß zwei unabhängige, in ihrer Charakteristik möglichst gleiche Vorlauftemperaturfühler vorgesehen werden müssen, was sowohl hinsichtlich der Regelelektronik als auch hinsichtlich der Investitionskosten und auch der höheren Störanfälligkeit ungünstig ist.

Nach einer anderen bekannten Lösung des Problems der Erfassung des Istwerts der Vorlauftemperatur des Heizungsvorlaufs wird der Vorlauftemperaturfühler im hydraulischen Entkoppler selbst angeordnet, der somit eine Mischtemperatur erfaßt, die nicht unter allen Betriebsbedingungen des Heizungssystem dem Istwert der Vorlauftemperatur entspricht bzw. ihm proportional ist.

Dieses System hat den Nachteil, daß bei bestimmten Betriebszuständen eine falsche Vorlauftemperatur im Sekundärkreis resultiert, wodurch wiederum auch die Vorteile einer außentemperaturgeführten Heizungsregelung teilweise verlorengehen können.

Der Erfindung liegt die Aufgabe zugrunde, ein Verfahren und eine Vorrichtung zur Regelung der Vorlauftemperatur in Mehrkessel-Heizungssystemen mit hydraulischem Entkoppler anzugeben, bei denen die oben erläuterten Nachteile des Stands der Technik vermieden werden und die mit nur einem einzigen Temperaturfühler unter allen Betriebsbedingungen eine genaue Regelung der Vorlauftemperatur des Sekundärkreises mit den Wärmeverbrauchern erlaubt.

Die Aufgabe wird anspruchsgemäß gelöst. Die abhängigen Ansprüche betreffen vorteilhafte Ausführungsformen der Erfindungskonzeption.

Das erfindungsgemäße Verfahren zur Regelung der Vorlauftemperatur betrifft Heizungssysteme, die mit einem flüssigen Wärmeträger, insbesondere Wasser bzw. wäßrigen, Gefrierschutzmittel und ggfs. Korrosionsinhibitoren enthaltenden wäßrigen Lösungen, betrieben werden und die aufweisen:

Eine Mehrkesselanlage mit mehreren hydraulisch parallelgeschalteten, getrennt schaltbaren Heizkesseln, die jeweils einen Kesseltemperaturfühler zur Erfassung der Kesseltemperatur, ein Ventil in der Kesselvorlauf- oder Kesselrücklaufleitung sowie eine Umwälzpumpe aufweisen,

einen zwischen die Mehrkesselanlage und die Wärmeverbraucher geschalteten hydraulischen Entkoppler sowie

mindestens eine elektronische Regeleinrichtung, welche die der Kesseltemperatur entsprechenden Ausgangssignale der Kesseltemperaturfühler erfaßt und auf der Basis einer dem Sollwert der Vorlauftemperatur entsprechenden Führungsgröße sowie unter bestimmten Betriebsbedingungen auf der Basis einer dem Istwert der Vorlauftemperatur im Primärkreis der Mehrkesselanlage vor dem hydraulischen Entkoppler entsprechenden Vorlauftemperatur die Kesseltemperatur der Heizkessel und gegebenenfalls entsprechende Stellorgane und/oder Pumpen steuert
sowie in Abhängigkeit vom erfaßten Wärmebedarf der Wärmeverbraucher die Heizkessel zu- und abschaltet und deren Ventile und Umwälzpumpen steuert;
es ist dadurch gekennzeichnet, daß
die Vorlauftemperatur vor dem hydraulischen Entkoppler aus den Kesseltemperaturen der in Betrieb befindlichen, mit geöffnetem Ventil zugeschalteten Heizkessel nach einer vorgegebenen mathematischen Beziehung berechnet und als Istwert der Vorlauftemperatur verwendet wird.

Die Erfindungskonzeption beruht entsprechend prinzipiell darauf, daß der primärseitige Vorlauftemperaturfühler entfällt und die primärseitige Vorlauftemperatur nicht gemessen, sondern rechnerisch auf der Basis der Ausgangssignale der Kesseltemperaturfühler ermittelt wird.

Der sekundärseitige Vorlauftemperaturfühler dient zusammen mit der rechnerisch ermittelten primärseitigen Vorlauftemperatur zur Erfassung des Belastungszustandes der Heizkesselanlage und damit zur betriebszustandsabhängigen Umschaltung zwischen der regeltechnischen Berücksichtigung der sekundärseitigen und der primärseitigen Vorlauftemperatur als Istwert für die Regelelektronik.

Die Erfindungskonzeption eignet sich insbesondere für mit fossilen Brennstoffen wie Heizöl oder Erdgas betriebene Heizungskessel als Wärmequellen. Die vorgegebene mathematische Beziehung, aufgrund deren der Istwert der Vorlauftemperatur aus den Kesseltemperaturen der in Betrieb befindlichen Heizkessel berechnet wird, beruht entweder auf einem theoretisch abgeleiteten oder einem empirisch ermittelten mathematischen Modell, das für bestimmte Betriebsbedingungen und insbesondere in Abhängigkeit von der Anzahl in Betrieb befindlicher Heizkessel und deren Durchsätzen an Wärmeträger eine korrekte Berechnung des Istwerts der Vorlauftemperatur erlaubt.

Nach einer vorteilhaften Ausführungsform wird, insbesondere, wenn sämtliche Heizkessel mit gleichem oder näherungsweise gleichem sowie konstantem Durchsatz an Wärmeträger betrieben werden, ein Mittelwert aus den Kesseltemperaturen als Vorlauftemperatur berechnet, der insbesondere der arithmetische Mittelwert der Kesseltemperaturen ist. Neben dem arithmetischen Mittel und dem gewichteten arithmetischen Mittel kommen zur Berechnung des Istwerts der Vorlauftemperatur auch die geometrische, ggfs. gewichtete Mittelung, die harmonische Mittelung, die ebenfalls ggfs. gewichtet sein kann, sowie etwa die quadratische Mittelung in Frage, die auch ggfs. unter Anwendung von Korrektur- und Gewichtungsfaktoren modifiziert sein kann.

Alternativ zu der Anwendung mathematischer Mittelungsverfahren kann die Ermittlung des Istwerts der Vorlauftemperatur aus den Kesseltemperaturen der in Betrieb befindlichen Heizungskessel auch durch Auslegen entsprechender Werte aus einem in einem Speicher abgelegten Kennfeld erfolgen, die zuvor auf eine geeignete Weise rechnerisch oder empirisch ermittelt wurden. Auch diese Variante wird unter dem Begriff der rechnerischen Ermittlung des Istwerts der Vorlauftemperatur verstanden. Bei ferngesteuerten und insbesondere von einem Zentralcomputer aus gesteuerten Heizungssystemen, die ggfs. über Datenfernübertragung, beispielsweise über ein Modem, erfolgen kann, kann ferner auch die der Berechnung des Istwerts der Vorlauftemperatur zugrundeliegende mathematische Beziehung, vorteilhaft in Abhängigkeit von erfaßten Betriebsbedingungen, geändert werden.

Wenn die Durchsätze des Wärmeträgers durch die Heizkessel nicht sämtlich gleich oder näherungsweise gleich, jedoch konstant sind, wird z.B. der gewichtete arithmetische Mittelwert der Kesseltemperaturen der in Betrieb befindlichen, zugeschalteten Heizkessel als Vorlauftemperatur vorteilhaft so berechnet, daß die Gewichtungsfaktoren dem jeweiligen Verhältnis des Durchsatzes des betreffenden Heizkessels an Wärmeträger zum Gesamtdurchsatz aller in Betrieb befindlichen, zugeschalteten Heizkessel an Wärmeträger entsprechen. In diesem Fall geschieht die Berechnung des gewichteten arithmetischen Mittelwerts der Kesseltemperaturen nach folgender Gleichung:

$$VT1 = \frac{KF1 \cdot \dot{V}1 \cdot T1 + KF2 \cdot \dot{V}2 \cdot T2 + KF3 \cdot \dot{V}3 \cdot T3}{KF1 \cdot \dot{V}1 + KF2 \cdot \dot{V}2 + KF3 \cdot \dot{V}3} \quad (1),$$

worin bedeuten:

| | |
|---|---|
| VT1: | Vorlauftemperatur vor dem hydraulischen Entkoppler; |
| T1, T2, T3: | Kesseltemperaturen der Heizkessel 1, 2, 3; |

$\dot{V}1$, $\dot{V}2$, $\dot{V}3$: Durchsätze des Wärmeträgers durch die Heizkessel 1, 2, 3;
KF1, KF2, KF3: Kesselfreigabekoeffizienten zu den Heizkesseln 1, 2 bzw. 3 (EIN: KF = 1; AUS: KF = 0).

Eine direkte Erfassung der Volumenströme $\dot{V}$ (z.B. l/h) des Wärmeträgers durch die betreffenden Heizkessel ist nicht unbedingt erforderlich, da bei Mehrkesselanlagen sämtliche Heizkessel in der Regel die gleiche Leistung besitzen und auch mit gleichen Pumpen konstanter, gleicher Drehzahl betrieben werden, so daß, wenn von unterschiedlichen hydraulischen Widerständen abgesehen wird, von gleichen Durchsätzen an Wärmeträger ausgegangen werden kann. Auf der anderen Seite können unterschiedliche Durchsätze $\dot{V}$ an Wärmeträger durch verschiedene Pumpstufen und/oder unterschiedliche hydraulische Widerstände der betreffenden Teilkreise der einzelnen Heizkessel bedingt sein; in diesen Fällen können die Durchsätze entweder einmal bei Inbetriebnahme der Anlage gemessen oder auch berechnet werden.

Wenn andererseits sämtliche Heizkessel gleichen oder näherungsweise gleichen und konstanten Durchsatz (Volumenstrom) an Wärmeträger aufweisen, vereinfacht sich die obige Gleichung wie folgt:

$$VT1 = \frac{KF1 \quad T1 + KF2 \quad T2 + KF3 \quad T3}{KF1 + KF2 + KF3} \qquad (2),$$

worin VT1, T1, T2, T3 sowie KF1, KF2 und KF3 die oben angegebene Bedeutung besitzen.

Diese vereinfachte Mittelwertbildung ist bei der weitaus überwiegenden Anzahl der Mehrkesselanlagen möglich, da in den allermeisten Fällen näherungsweise gleiche Durchsätze an Wärmeträger durch die einzelnen Heizkesselkreise vorliegen.

Nach einer vorteilhaften Ausführungsform des erfindungsgemäßen Verfahrens wird die aus den Kesseltemperaturen der in Betrieb befindlichen, zugeschalteten Heizkessel berechnete Vorlauftemperatur nur dann als Istwert der Vorlauftemperatur herangezogen, wenn im Sekundärkreis hinter dem hydraulischen Entkoppler keine oder näherungsweise keine Leistungsabnahme durch Wärmeverbraucher vorliegt, während bei Vorliegen einer Leistungsabnahe durch Wärmeverbraucher die im Sekundärkreis hinter dem hydraulischen Entkoppler gemessene Vorlauftemperatur als Istwert der Vorlauftemperatur verwendet wird. Alternativ dazu kann bei Vorliegen von Leistungsabnahme durch Wärmeverbraucher auch der arithmetische Mittelwert (VT) der berechneten Vorlauftemperatur und der im Sekundärkreis hinter dem hydraulischen Entkoppler gemessenen Vorlauftemperatur als Istwert der Vorlauftemperatur herangezogen werden.

Die Umschaltung zwischen der Verwendung der berechneten Vorlauftemperatur unter Verwendung der gemessenen Vorlauftemperatur bzw. der mittleren Vorlauftemperatur als Istwert wird vorzugsweise aufgrund folgender Umschaltkriterien vorgenommen:
$VT2 \leqq VT_{SOLL} \geqq VT1$: Verwendung von VT2 bzw. von VT,
$VT2 < VT_{SOLL} < VT1$: Verwendung von VT1,
wobei $VT_{SOLL}$ den Sollwert der Vorlauftemperatur bedeutet.

Nach einer vorteilhaften Ausführungsform werden die obigen Umschaltkriterien erst dann angewandt, wenn sie während einer vorgegebenen Zeitdauer vorliegen, um Fehlermittlungen der Vorlauf-Isttemperatur aufgrund von zeitlich begrenzten Überschwingungen der Kesseltemperaturen durch Nachheizung nach Brennerabschaltung zu vermeiden. Alternativ dazu können auch entsprechende Ober- und Untergrenzen für die in den obigen Umschaltkriterien genannten Temperaturen vorgegeben und angewandt werden.

Die rechnerische Ermittlung der Vorlauftemperatur im Primärkreis dient entsprechend nicht nur der rechnerischen Istwerterfassung, sondern auch, zusammen mit der Messung der Vorlauftemperatur im Sekundärkreis, zur logischen Entscheidung, welche Betriebszustände vorliegen, d.h., ob die gemessene Vorlauftemperatur, die mittlere Vorlauftemperatur oder die berechnete Vorlauftemperatur zur Regelung verwendet werden, aufgrund der oben angegebenen Umschaltkriterien.

Die Erfindungskonzeption läßt sich besonders vorteilhaft auf Heizungssysteme anwenden, bei denen jeder Heizkessel eine zugeordnete elektronische Regeleinrichtung aufweist, die zumindest die Kesseltemperatur des betreffenden Heizkessels regelt, wobei die Regelung der Vorlauftemperatur nach dem Master-Slave-Prinzip durchgeführt wird. Dabei wird der elektronischen Regeleinrichtung eines der Heizkessel, der bei Betrieb des Heizungssystems stets in Betrieb und hydraulisch zugeschaltet ist, Master-Funktion zugeordnet, während den elektronischen Regeleinrichtungen der übrigen Heizkessel Slave-Funktion zugeordnet wird. Sämtliche elektronischen Regeleinrichtungen sind in diesem Fall über ein Bussystem miteinander verbunden, über das die Kesseltemperaturen der Regeleinrichtungen mit Slave-Funktion zur Regeleinrichtung mit Master-Funktion übertragen werden, welche die Inbetriebnahme bzw. Abschaltung von Heizkesseln und deren hydraulische Zuschaltung bzw. Abschaltung über die Umwälzpumpen und Ventile in Abhängigkeit vom Wärmebedarf des Systems steuert. Die Berechnung der Vorlauftemperatur im Primärkreis wird in diesem Fall ebenfalls von der elektronischen Regeleinrichtung mit Master-Funktion übernommen.

Die Zuordnung der Master-Funktion zu einem bestimmten in Betrieb befindlichen und hydraulisch zugeschalteten Heizkessel kann entweder fest vorgegeben oder variabel sein, wobei in diesem Falle die Master-Funktion nach vorgegebenen Kriterien von einer der elektronischen Regeleinrichtungen übernommen oder von einem externen Computersystem oder durch externe Datenübertragung einer der elektronischen Regeleinrichtungen temporär oder dauernd zugeteilt werden kann.

Die erfindungsgemäße Vorrichtung, mit der sich das oben definierte Verfahren vorteilhaft durchführen läßt, umfaßt entsprechend eine Mehrkesselanlage mit mehreren hydraulisch parallelgeschalteten, getrennt schaltbaren Heizkesseln, die jeweils einen Kesseltemperaturfühler zur Erfassung der Kesseltemperatur, ein Ventil in der Kesselvorlauf-oder Kesselrücklaufleitung sowie eine Umwälzpumpe aufweisen, einen zwischen die Mehrkesselanlage und die Wärmeverbraucher geschalteten hydraulischen Entkoppler sowie mindestens eine elektronische Regeleinrichtung, welche die der Kesseltemperatur entsprechenden Ausgangssignale der Kesseltemperaturfühler erfaßt und auf der Basis einer dem Sollwert der Vorlauftemperatur entsprechenden Führungsgröße sowie unter bestimmten Betriebsbedingungen auf der Basis einer dem Istwert der Vorlauftemperatur im Primärkreis der Mehrkesselanlage vor dem hydraulischen Entkoppler entsprechenden Vorlauftemperatur die Kesseltemperatur der Heizkessel und ggfs. entsprechende Stellorgane und/ oder Pumpen steuert sowie in Abhängigkeit vom erfaßten Wärmebedarf der Wärmeverbraucher die Heizkessel zu- und abschaltet und deren Ventile und Umwälzpumpen steuert; sie ist dadurch gekennzeichnet, daß die elektronische Regeleinrichtung so ausgebildet ist, daß sie die Vorlauftemperatur VT1 vor dem hydraulischen Entkoppler aus den Kesseltemperaturen T1, T2, T3 der in Betrieb befindlichen, mit geöffnetem Ventil zugeschalteten Heizkessel nach einer vorgegebenen mathematischen Beziehung berechnet bzw. ermittelt und als Istwert der Vorlauftemperatur verwendet.

Die erfindungsgemäße Vorrichtung ist nach vorteilhaften Ausführungsformen so ausgebildet, daß sie eine der oben im einzelnen erläuterten Mittelwertbildungen zur Berechnung des Istwerts der Vorlauftemperatur, VT1, verwendet, insbesondere nach den oben angegebenen Gleichungen (1) bzw. (2). Die elektronische Regeleinrichtung, die entsprechend auch ein Master-Slave-System darstellen kann, wie oben definiert, ist ferner vorteilhaft so ausgebildet, daß sie die Umschaltung zwischen der Verwendung der berechneten Vorlauftemperatur VT1 und der Verwendung der gemessenen Vorlauftemperatur bzw. der mittleren Vorlauftemperatur VT als Istwert aufgrund der oben angegebenen Umschaltkriterien durchführt.

Die Erfindung wird im folgenden unter Bezug auf die Zeichnung näher erläutert, wobei die Figuren 1 bis 7 schematische Darstellungen der erfindungsgemäßen Vorrichtung betreffen. Es zeigen:

| | |
|---|---|
| Fig. 1: | Eine erfindungsgemäße Vorrichtung mit einer Mehrkesselanlage mit drei Heizkesseln und einer einzigen elektronischen Regeleinrichtung; |
| Fig. 2: | eine erfindungsgemäße Vorrichtung wie in Fig. 1, bei der Vorlaufbeimischung im Primärkreis vorgesehen ist, |
| Fig. 3: | eine erfindungsgemäße Vorrichtung, bei der jeder einzelne Kesselkreis eine unabhängige Vorlaufbeimischung aufweist; |
| Fig. 4: | eine erfindungsgemäße Vorrichtung vom Typ der Vorrichtung von Fig. 1, die nach dem Master-Slave-Prinzip aufgebaut ist; |
| Fig. 5: | eine erfindungsgemäße Vorrichtung gemäß Anspruch 4, jedoch mit Vorlaufbeimischung im Primärkreis; |
| Fig. 6: | eine erfindungsgemäße Vorrichtung wie in Fig. 4, jedoch mit unabhängiger Vorlaufbeimischung in den einzelnen Heizkreisen; |
| Fig. 7: | eine schematische Darstellung von nach dem Master-Slave-Prinzip arbeitenden elektronischen Regeleinrichtungen; |
| Fig. 8: | ein Flußdiagramm zur Erläuterung der Master-Slave-Regelung sowie |
| Fig. 9A und 9B: | schematische Darstellungen zur Erläuterung von kaskadenförmiger bzw. paralleler Zu- bzw. Abschaltung von Heizkesseln. |

Die in Fig. 1 dargestellte erfindungsgemäße Vorrichtung umfaßt eine Mehrkesselanlage 1 mit einem zwischen Vorlauf und Rücklauf parallel eingeschalteten hydraulischen Entkoppler HE, an den sekundärseitig die Vorlaufleitung VL und die Rücklaufleitung RL des Systems der Wärmeverbraucher WV angeschlossen sind, wobei im Sekundärkreis eine Umwälzpumpe P4 vorgesehen ist. Die Wärmeverbraucher WV können dabei Heizkörper beliebiger Art oder etwa Wärmeaustauscher wie beispielsweise Warmwasserboiler darstellen.

Die Mehrkesselanlage 1 umfaßt drei Heizkessel K1, K2, K3, die hydraulisch parallelgeschaltet sind und jeweils einen Kesseltemperaturfühler F1, F2, F3 zur Erfassung der Kesseltemperatur T1, T2, T3, ein Ventil

D1, D2, D3 sowie eine Umwälzpumpe P1, P2, P3 aufweisen. Die Heizkessel K1, K2, K3 sind unabhängig ein- und abschaltbar. Die Steuerung bzw. Regelung erfolgt mit einer elektronischen Regeleinrichtung ER, welche die der Kesseltemperatur T1, T2, T3 entsprechenden Ausgangssignale der Kesseltemperaturfühler F1, F2, F3, ein der Außentemperatur AT entsprechendes Signal sowie ein der Vorlauftemperatur VT2 entsprechendes Signal erfaßt, das von einem im Sekundärkreis vorgesehenen Vorlauftemperaturfühler VF abgegeben wird. Die elektronische Regeleinrichtung ER steuert auf der Basis einer dem Sollwert der ermittelten Vorlauftemperatur entsprechenden Führungsgröße sowie einer dem Istwert der Vorlauftemperatur im Primärkreis der Mehrkesselanlage 1 vor dem hydraulischen Entkoppler HE entsprechenden Vorlauftemperatur VT1 bzw. der Vorlauftemperatur VT2 oder der mittleren Vorlauftemperatur VT die Kesseltemperatur T1, T2, T3 der Heizkessel K1, K2, K3 und gibt je nach Wärmebedarf im Sekundärkreis Ausgangssignale für die Inbetriebnahme der Brenner der Kessel K1, K2, K3 sowie Signale zur Ansteuerung der Pumpen P1, P2, P3 und P4 sowie Ausgangssignale zur Steuerung der Ventile D1, D2, D3 ab.

Wenn beispielsweise der Heizkessel K1 in Betrieb ist und bei erhöhtem Wärmebedarf der Heizkessel K2 zugeschaltet wird, wird entsprechend der Brenner des Heizkessels K2 durch ein entsprechendes Ausgangssignal von der elektronischen Regeleinrichtung ER eingeschaltet und eine Kesseltemperatur vorgegeben, deren Istwert T2 vom Kesseltemperaturfühler F2 erfaßt wird. Ferner wird die Pumpe P2 in Betrieb gesetzt und das Ventil D2 geöffnet. Die Ventile D1, D2, D3 sind üblicherweise Ventile mit Zweipunktcharakter, jedoch können auch Regelventile vorgesehen sein, wobei in diesem Fall der entsprechende Durchsatz durch einen Heizkreis aufgrund der Stellung des entsprechenden Regelventils ermittelt bzw. aus einem Speicher oder Kennfeld entnommen wird, falls die Ermittlung von VT1 durch gewichtete Mittelung erfolgt.

Die elektronische Regeleinrichtung ER ermittelt die Vorlauftemperatur VT1 im Primärkreis vor dem hydraulischen Entkoppler HE erfindungsgemäß aus den erfaßten Kesseltemperaturen T1, T2, T3 der in Betrieb befindlichen, mit geöffnetem Ventil D1, D2, D3 zugeschalteten Heizkessel K1, K2, K3 nach einer vorgegebenen mathematischen Beziehung, was softwaremäßig oder beispielsweise durch Auslegen entsprechender Werte aus einem in einem nichtflüchtigen Speicher abgelegten Kennfeld erfolgen kann. Die berechnete Vorlauftemperatur VT1 wird als Istwert der Vorlauftemperatur verwendet, insbesondere, wenn im Sekundärkreis keine oder näherungsweise keine Leistungsabnahme durch Wärmeverbraucher WV vorliegt. Die elektronische Regeleinrichtung ER ist dementsprechend so ausgestaltet, daß sie aufgrund der Ermittlung der Vorlauftemperatur VT1, die folglich ohne einen hierfür vorgesehenen Temperaturfühler erhalten wird, sowie der Vorlauftemperatur VT2 im Sekundärkreis die Erfülltheit der oben angegebenen Umschaltkriterien prüft und bei Erfülltheit eines der beiden Kriterien eine entsprechende Umschaltung vornimmt, wobei im Fall keiner oder näherungsweise keiner Leistungsabnahme im Sekundärkreis die berechnete Vorlauftemperatur VT1 und bei Vorliegen einer Leistungsabnahme durch Wärmeverbraucher WV im Sekundärkreis die gemessene Vorlauftemperatur VT2 als Istwert der Vorlauftemperatur herangezogen wird.

Nach einer Weiterbildung dieser Vorrichtungskonzeption kann bei Vorliegen einer Leistungsabnahme im Sekundärkreis auch eine mittlere Vorlauftemperatur VT als Istwert für die Regelung herangezogen werden, die dem arithmetischen Mittelwert von VT1 und VT2 entspricht ($VT = (VT1 + VT2)/2$).

Die Zuschaltung bzw. Abschaltung von Heizkesseln wird von der elektronischen Regeleinrichtung in Abhängigkeit von der erfaßten Leistungsabnahme, ggfs. unter Berücksichtigung der erfaßten Außentemperatur AT, vorgenommen. Kriterien für diese Zu- und Abschaltung von Heizkesseln sind dem Fachmann geläufig.

Die elektronische Regeleinrichtung ER kann unabhängig und anlagenspezifisch ausgebildet sein; sie kann jedoch auch über eine Datenkommunikationseinrichtung, beispielsweise über eine Telefonleitung und ein Modem, mit einem externen Computersystem oder einem Rundsteuersystem verbunden sein, das Änderungen in den Regler-Kenndaten durch externen Eingriff vorzunehmen vermag.

Die in Fig. 2 dargestellte erfindungsgemäße Vorrichtung besitzt prinzipiell gleichen Aufbau wie die Vorrichtung von Fig. 1, wobei gleiche Komponenten und gleiche Signale mit gleichen Bezeichnungen versehen sind. Die Vorrichtung von Fig. 2 weist ein Mischventil M auf, das in die Rücklaufleitung des Primärkreises eingeschaltet ist und eine Beimischung von Primärvorlauf in die Rücklaufleitung ermöglicht. Wenn die erforderliche Rücklauftemperatur bei bestimmten Betriebsverhältnissen nicht erreicht werden sollte, wird diese aufgrund des Dreiwegemischventils M durch Vorlaufbeimischung des Primärkreises erzeugt. Die damit verbundene Volumenstromdrosselung aus dem Primärkreis in den hydraulischen Entkoppler HE des eintretenden Wärmeträgervolumens ist für die Berechnung bei VT1 nicht zu berücksichtigen, da bei niedriger Rücklauftemperatur Leistungsabnahme vorliegt, so daß unter diesen Betriebsbedingungen nicht die berechnete Vorlauftemperatur VT1, sondern die gemessene Vorlauftemperatur VT2 zur Regelung herangezogen wird. Die Erfassung der Rücklauftemperatur RT ist zur Steuerung des Mischventils M notwendig; sie erfolgt mittels eines Rücklauftemperaturfühlers RF, der die Rücklauftemperatur RT erfaßt,

die als zusätzliches Eingangssignal zur elektronischen Regeleinrichtung ER gelangt. Sie gibt entsprechend auch ein Ausgangssignal zur Steuerung des Mischventils M ab. Derartige Vorlaufbeimischungen sind für Mehrkesselanlagen an sich bekannt, so daß eine nähere Erläuterung der Vorlaufbeimischung im Primärkreis nicht erforderlich ist.

Die elektronische Regeleinrichtung ER ist vorteilhaft eine mikroprozessorgesteuerte Regeleinrichtung, die einen zentralen Prozessor (CPU), einen Istwertspeicher (ROM), einen Schreib-Lese-Speicher (RAM), eine I/O-Einrichtung sowie ein Bussystem aufweist. Derartige Mikroprozessorsysteme und ihre Funktion sind dem Fachmann ebenfalls geläufig.

Die Umschaltung von der Verwendung eines Istwerts der Vorlauftemperatur (VT1) zur Verwendung des anderen Istwerts der Vorlauftemperatur (VT bzw. VT2) erfolgt vorzugsweise erst dann, wenn das betreffende Umschaltkriterium während einer vorgegebenen Zeitdauer erfüllt ist, um Überschwingeffekte der Kesseltemperatur durch Nachheizung nach Brennerabschaltung nicht wirksam werden zu lassen. Diese Zeitdauer hängt von der thermischen Trägheit der jeweiligen Anlage ab und kann anlagenspezifisch vorgegeben werden.

Die in Fig. 3 dargestellte erfindungsgemäße Vorrichtung entspricht prinzipiell der Vorrichtung von Fig. 2, unterscheidet sich jedoch von ihr darin, daß die Vorlaufbeimischung nicht in die gemeinsame Rücklaufleitung des Primärkreises wie in Fig. 2 erfolgt, sondern unabhängig für jeden Heizkreis. Dementsprechend sind in den Heizkreisen der Heizkessel K1, K2 bzw. K3 jeweils ein Dreiwegemischventil M1, M2, M3 sowie ein Rücklauftemperaturfühler RT1, RT2, RT3 vorgesehen; die Umwälzpumpen P1, P2, P3 sind in diesem Fall in der Rücklaufleitung zum betreffenden Heizkessel angeordnet. Die elektronische Regeleinrichtung ER ist in diesem Fall so ausgebildet, daß sie die Ausgangssignale der Rücklauftemperatur RT1, RT2, RT3 erfaßt und durch entsprechende Steuersignale die Mischventile M1, M2, M3 steuert, um so in jedem Heizkreis eine Mindest-Rücklauftemperatur aufrechtzuerhalten. In diesem Fall laufen sämtliche Volumenströme der drei Heizkreise, die insgesamt den Primärkreis darstellen, durch den hydraulischen Entkoppler HE. Auch in diesem Fall wird, unter Berücksichtigung der oben erläuterten Umschaltkriterien, bei stagnierender Leistungsabnahme im Sekundärkreis die berechnete bzw. aus einem Kennfeld entnommene Vorlauftemperatur VT1 zur Regelung herangezogen.

Die in den Fig. 4 bis 6 dargestellten erfindungsgemäßen Vorrichtungen entsprechen hinsichtlich des hydraulischen Aufbaus den Vorrichtungen der Fig. 1 bis 3. Die Vorrichtung von Fig. 4 weist keine Vorlaufbeimischung zum Rücklauf des Primärkreises auf, während die Vorrichtung der Fig. 5 ein Ventil M und die Vorrichtung von Fig. 6 drei Mischventile M1, M2, M3 aufweist; diesbezüglich gilt das zu den Vorrichtungen der Fig. 1 bis 3 Ausgeführte entsprechend.

Die Vorrichtungen der Fig. 4 bis 6 entsprechen erfindungsgemäß besonders bevorzugten Ausführungsformen, die hinsichtlich der elektronischen Regelung hierarchisch nach dem Master-Slave-Prinzip aufgebaut sind. Jeder Heizkessel K1, K2, K3 weist eine zugeordnete elektronische Regeleinrichtung ER1, ER2, ER3 auf, von denen in den Fig. 4 bis 6 zur Vereinfachung jeweils nur die elektronischen Regeleinrichtungen ER1 und ER2 dargestellt sind. Diese Regeleinrichtungen steuern zumindest die Kesseltemperatur T1 der betreffenden Heizkessel. Eine der elektronischen Regeleinrichtungen, im vorliegenden Fall die elektronische Regeleinrichtunng ER1, hat Master-Funktion, während die übrigen elektronischen Regeleinrichtungen ER2, ER3 Slave-Funktion aufweisen. Der elektronischen Regeleinrichtung ER1 mit Master-Funktion werden die Eingangssignale der Kesseltemperatur T1 sowie der Vorlauftemperatur VT2 des Vorlauffühlers VF im Sekundärkreis sowie das Signal der Außentemperatur AT zugeführt; die elektronische Regeleinrichtung ER1 steuert den Betrieb des Heizkessels K1 sowie der Pumpen P1 und P4 und des Ventils D1. Im Fall der Vorrichtung von Fig. 5 steuert die elektronische Regeleinrichtung ER1 ferner das Mischventil M bzw. im Fall der Vorrichtung von Fig. 6 das Mischventil M1.

Die elektronische Regeleinrichtung ER1 mit Master-Funktion ist über ein Bussystem mit den Regeleinrichtungen ER2 und ER3 verbunden, über das die Datenkommunikation in diesem hierarchischen System erfolgt. Die Slave-Regeleinrichtung ER2 emfängt das Signal der Kesseltemperatur T2 vom Kesseltemperaturfühler F2 und steuert mit entsprechenden Ausgangssignalen den Betrieb des Heizkessels K2, der Umwälzpumpe P2 und des Mischventils M2, wobei vom Rücklauftemperaturfühler RT2 ein entsprechendes Eingangssignal zur Slave-Regeleinrichtung ER2 übertragen wird.

Entsprechendes gilt auch für die Slave-Regeleinrichtung ER3.

In Fig. 7 ist die Datenkommunikation des Master-Slave-Systems schematisch dargestellt. Die Master-Regeleinrichtung ER1 empfängt das der Vorlauftemperatur VT2 entsprechende Signal vom Vorlauffühler VF im Sekundärkreis sowie das Signal der Kesseltemperatur T1 des Heizkessels K1 vom Kesseltemperaturfühler F1. Die Slave-Regeleinrichtung ER2 empfängt vom Kesseltemperaturfühler F2 das Signal der Kesseltemperatur T2, während die Slave-Regeleinrichtung ER3 vom Kesseltemperaturfühler F3 das der Kesseltemperatur T3 entsprechende Eingangssignal empfängt. Die elektronischen Regeleinrichtungen sind untereinander durch ein Bussystem verbunden, wobei die Datenübertragung vorteilhaft über einen digitalen seriellen Zweidraht-Bus erfolgt. Die entsprechenden Temperatursignale werden über A/D-Wandler digitalisiert und dann entsprechend verarbeitet. Die Master-Regeleinrichtung ER1 bestimmt, welche der Slave-Regeleinrichtungen den entsprechenden Heizkreis zu schalten hat, d.h. den Heizkessel K2 bzw. K3, die Umwälzpumpe P2 bzw. P3 und das Ventil D2 bzw. D3, aufgrund der Leistungsanforderung im Sekundärkreis und gegebenenfalls unter Berücksichtigung der Außentemperatur AT. Die Regeleinrichtung ER1 mit Master-Funktion steuert folglich die Inbetriebnahme bzw. Abschaltung der Heizkessel K2, K3 und deren Zuschaltung bzw. Abschaltung über die Umwälzpumpen P2, P3 und die Ventile D2, D3 und berechnet bzw. ermittelt die Vorlauftemperatur VT1 und entscheidet aufgrund der Erfülltheit der oben erläuterten Umschaltkriterien, welche Vorlauftemperatur (VT1 bzw. VT2 oder VT) als Istwert der Regelung zugrundegelegt wird.

Die Master-Funktion ist im einfachsten Fall einer der Regeleinrichtungen (ER1) fest zugeordnet. Alternativ kann die Master-Funktion jedoch auch nach vorgegebenen Kriterien von jeder elektronischen Regeleinrichtung ER1, ER2, ER3 allein übernommen oder auch von einem externen Computersystem oder durch externe Datenübertragung einer der elektronischen Regeleinrichtungen ER1, ER2, ER3 temporär oder dauernd zugeteilt werden.

Die Master-Regeleinrichtung ER1 kann ferner beispielsweise in einem ROM abgelegte Kennfelder enthalten, die gegebenenfalls mehrdimensional sind und bereits vorberechnete Werte von VT1 in Abhängigkeit von den erfaßten Kesseltemperaturen T1, T2, T3 enthalten. Auf diese Weise lassen sich Rechenoperationen einsparen, was im Hinblick auf das Mikroprozessorsystem vorteilhaft ist.

In Fig. 8 ist das Prinzip der Master-Slave-Regelung anhand eines Flußdiagramms dargestellt. Nach dem Start werden die Analogwerte VT2 und T1 von der elektronischen Regeleinrichtung ER1 mit Master-Funktion eingelesen und in einem RAM abgelegt. Die von den Slave-Regeleinrichtungen ER2 bzw. ER3 erfaßten Kesseltemperaturen T2 bzw. T3 werden über eine serielle Schnittstelle zur Master-Regeleinrichtung ER1 übertragen und dort ebenfalls in einem RAM abgespeichert. In einem nachgeschalteten Schritt wird aufgrund der oben erläuterten Umschaltkriterien entschieden, ob Leistungsabnahme im Sekundärkreis vorliegt oder nicht. Wenn Leistungsabnahme festgestellt wird, wird die Vorlauftemperatur VT2 im Sekundärkreis mit dem entsprechenden Sollwert $VT_{SOLL}$ verglichen, worauf die Freigabekoeffizienten KF1 KF2 und KF3 bestimmt werden. Falls andererseits keine Leistungsabnahme festgestellt wird, wird, nach dem oben erläuterten Umschaltkriterium, die nach einer entsprechenden mathematischen Beziehung berechnete bzw. ermittelte Vorlauftemperatur VT1 und ebenfalls mit dem Sollwert $VT_{SOLL}$ verglichen, worauf die Kesselfreigabekoeffizienten KF1, KF2 und KF3 bestimmt werden. In dem nachgeschalteten Schritt werden diese Kesselfreigabekoeffizienten als Parameter zu den Slave-Regeleinrichtungen ER2 und ER3 übertragen. Wenn beispielsweise, wie durch das nachgeschaltete Entscheidungsfeld angedeutet ist, der Kesselfreigabekoeffizient KF1 gleich 1 ist, bedeutet dies, daß der Brenner des Heizkessels K1 und die entsprechende Pumpe P1 und das Ventil D1 einzuschalten sind. Im gegenteiligen Fall wird der Kessel K1 mit seinem Brenner und den sonstigen Aggregaten ausgeschaltet.

Dieser Programmzyklus wiederholt sich entsprechend, wie am Ende des Flußdiagramms angedeutet.

In den Fig. 9A und 9B ist dargestellt, wie die Zu- bzw. Abschaltung von Heizkesseln mit unterschiedlichen Leistungsstufen erfolgen kann. Fig. 9A bezieht sich dabei auf eine kaskadenförmige Zu- bzw. Abschaltung, während sich Fig. 9B auf eine sog. parallele Zu- bzw. Abschaltung bezieht.

Die entsprechende Charakteristik der Zu- bzw. Abschaltung von Brennerstufen bzw. Heizkessel-Leistungsstufen wird gemäß einem entsprechenden Programm von der Master-Regeleinrichtung ER1 vorgenommen, die über das Bussystem entsprechende Steuersignale an die Slave-Regeleinrichtungen ER2, ER3 abgibt.

Auf diese Weise ist eine optimale Anpassung der Leistungserzeugung an die jeweilige Anlage möglich.

Die Erfindung führt zu einer erheblichen Vereinfachung der Regelung der Vorlauftemperatur bei Mehrkesselanlagen, da ein Vorlauftemperaturfühler im Primärkreis entfällt, so daß auch entsprechende mechanische bzw. elektronische Umschalteinrichtungen zwischen Vorlauftemperaturfühlern im Primärkreis und im Sekundärkreis entfallen können. Durch die mathematische Erzeugung des Wertes der Vorlauftemperatur VT1 ist es ferner möglich, auf sehr einfache Weise Korrekturen zur Ermittlung von VT1 anzubringen, da das zur Berechnung bzw. Ermittlung von VT1 herangezogene mathematische Modell anlagenspezifisch ausgelegt werden kann.

Durch die Master-Slave-Architektur können ferner die Slave-Regeleinrichtungen sehr einfach ausgebildet werden. Gerade bei der gleitenden und insbesondere außentemperaturgeführten Steuerung der Kesseltemperaturen bietet die erfindungsgemäße Konzeption folglich besondere Vorteile.

## Patentansprüche

1. Verfahren zur Regelung der Vorlauftemperatur in mit einem flüssigen Wärmeträger betriebenen Heizungssystemen mit

einer Mehrkesselanlage (1) mit mehreren parallelgeschalteten, getrennt schaltbaren Heizkesseln (K1, K2, K3), die jeweils einen Kesseltemperaturfühler (F1, F2, F3) zur Erfassung der Kesseltemperatur (T1, T2, T3), ein Ventil (D1, D2, D3; M1, M2, M3) in der Kesselvorlauf-oder Kesselrücklaufleitung sowie eine Umwälzpumpe (P1, P2, P3) aufweisen,

einem zwischen die Mehrkesselanlage (1) und die Wärmeverbraucher (WV) geschalteten hydraulischen Entkoppler (HE) sowie

mindestens einer elektronischen Regeleinrichtung (ER), welche die der Kesseltemperatur (T1, T2, T3) entsprechenden Ausgangssignale der Kesseltemperaturfühler (F1, F2, F3) erfaßt und auf der Basis einer dem Sollwert der Vorlauftemperatur ($VT_{SOLL}$) entsprechenden Führungsgröße sowie unter bestimmten Betriebsbedingungen auf der Basis einer dem Istwert der Vorlauftemperatur im Primärkreis der Mehrkesselanlage vor dem hydraulischen Entkoppler (HE) entsprechenden Vorlauftemperatur (VT1) die Kesseltemperatur (T1, T2, T3) der Heizkessel (K1, K2, K3) und gegebenenfalls entsprechende Stellorgane (M) und/oder Pumpen steuert

sowie in Abhängigkeit vom erfaßten Wärmebedarf der Wärmeverbraucher (WV) die Heizkessel (K1, K2, K3) zu- und abschaltet und deren Ventile (D1, D2, D3; M1, M2, M3) und Umwälzpumpen (P1, P2, P3) steuert,

**dadurch gekennzeichnet**, daß

die Vorlauftemperatur (VT1) vor dem hydraulischen Entkoppler (HE) aus den Kesseltemperaturen (T1, T2, T3) der in Betrieb befindlichen, mit geöffnetem Ventil (D1, D2, D3) zugeschalteten Heizkessel (K1, K2, K3) nach einer vorgegebenen mathematischen Beziehung berechnet und als Istwert der Vorlauftemperatur verwendet wird.

2. Verfahren nach Anspruch 1, dadurch gekennzeichnet, daß ein Mittelwert aus den Kesseltemperaturen (T1, T2, T3) der zugeschalteten Heizkessel (K1, K2, K3) als Vorlauftemperatur (VT1) berechnet wird.

3. Verfahren nach den Ansprüchen 1 und 2, dadurch gekennzeichnet, daß, wenn sämtliche Heizkessel (K1, K2, K3) mit gleichem oder näherungsweise gleichem sowie konstantem Durchsatz an Wärmeträger betrieben werden, der arithmetische Mittelwert der Kesseltemperaturen (T1, T2, T3) der in Betrieb befindlichen, zugeschalteten Heizkessel (K1, K2, K3) als Vorlauftemperatur (VT1) berechnet wird.

4. Verfahren nach den Ansprüchen 1 und 2, dadurch gekennzeichnet, daß, wenn die Durchsätze der Heizkessel (K1, K2, K3) an Wärmeträger nicht sämtlich gleich oder näherungsweise gleich, jedoch konstant sind, ein gewichteter arithmetischer Mittelwert der Kesseltemperaturen (T1, T2, T3) der in Betrieb befindlichen, zugeschalteten Heizkessel (K1, K2, K3) als Vorlauftemperatur (VT1) berechnet wird, wobei die Gewichtungsfaktoren dem jeweiligen Verhältnis des Durchsatzes ($\dot{V}1$, $\dot{V}2$ bzw. $\dot{V}3$) des betreffenden Heizkessels an Wärmeträger zum Gesamtdurchsatz ($\dot{V}1 + \dot{V}2 + \dot{V}3$) aller in Betrieb befindlichen, zugeschalteten Heizkessel an Wärmeträger entsprechen.

5. Verfahren nach den Ansprüchen 1 bis 4, dadurch gekennzeichnet, daß die aus den Kesseltemperaturen (T1, T2, T3) der in Betrieb befindlichen, zugeschalteten Heizkessel (K1, K2, K3) berechnete Vorlauftemperatur (VT1) nur dann als Istwert der Vorlauftemperatur herangezogen wird, wenn im Sekundärkreis hinter dem hydraulischen Entkoppler (HE) keine oder näherungsweise keine Leistungsabnahme durch Wärmeverbraucher (WV) vorliegt, und daß bei Vorliegen einer Leistungsabnahme durch Wärmeverbraucher (WV) die im Sekundärkreis hinter dem hydraulischen Entkoppler (HE) gemessene Vorlauftemperatur (VT2) oder die dem arithmetischen Mittelwert von VT1 und VT2 entsprechende mittlere Vorlauftemperatur (VT) als Istwert der Vorlauftemperatur verwendet wird.

6. Verfahren nach Anspruch 5, dadurch gekennzeichnet, daß die Umschaltung zwischen der Verwendung der berechneten Vorlauftemperatur (VT1) und der Verwendung der gemessenen Vorlauftemperatur (VT2) bzw. der mittleren Vorlauftemperatur (VT) als Istwert der Vorlauftemperatur aufgrund der

folgenden Umschaltkriterien vorgenommen wird:

$VT2 \leqq VT_{SOLL} \geqq VT1$: Verwendung von VT2 bzw. von VT,
$VT2 < VT_{SOLL} < VT1$: Verwendung von VT1,

wobei $VT_{SOLL}$ den Sollwert der Vorlauftemperatur bedeutet,
und die Umschaltung erst erfolgt, wenn das betreffende Umschaltkriterium während einer vorgegebenen Zeitdauer erfüllt ist.

**7.** Verfahren nach den Ansprüchen 1 bis 6, dadurch gekennzeichnet, daß die Regelung der Vorlauftemperatur bei Heizungssystemen, bei denen jeder Heizkessel (K1, K2, K3) eine zugeordnete elektronische Regeleinrichtung (ER1, ER2, ER3) aufweist, die zumindest die Kesseltemperatur (T1, T2, T3) des betreffenden Heizkessels regelt, nach dem Master-Slave-Prinzip durchgeführt wird, wobei der elektronischen Regeleinrichtung (ER1) eines der Heizkessel (K1), der bei Betrieb des Heizungssystems stets in Betrieb und hydraulisch zugeschaltet ist, Master-Funktion und den elektronischen Regeleinrichtungen (ER2, ER3) der übrigen Heizkessel (K2, K3) Slave-Funktion zugeordnet werden, die mit der elektronischen Regeleinrichtung (ER1) mit Master-Funktion über ein Bussystem verbunden sind, über das ihre Kesseltemperaturen (T2, T3) zur elektronischen Regeleinrichtung (ER1) mit Master-Funktion übertragen werden, und die Inbetriebnahme bzw. Abschaltung von Heizkesseln (K2, K3) und deren Zuschaltung bzw. Abschaltung über die Umwälzpumpen (P2, P3) und die Ventile (D2, D3) mit der elektronischen Regeleinrichtung (ER1) mit Master-Funktion gesteuert wird, welche die Vorlauftemperatur (VT1) bzw. die mittlere Vorlauftemperatur (VT) berechnet.

**8.** Verfahren nach Anspruch 7, dadurch gekennzeichnet, daß elektronische Regeleinrichtungen (ER1, ER2, ER3) verwendet werden, die so ausgebildet sind, daß die Master-Funktion nach vorgegebenen Kriterien von jeder elektronischen Regeleinrichtung (ER1, ER2, ER3) allein übernommen oder von einem externen Computersystem oder durch externe Datenübertragung einer der elektronischen Regeleinrichtungen (ER1, ER2, ER3) temporär oder dauernd zugeteilt werden kann.

**9.** Vorrichtung zur Regelung der Vorlauftemperatur in mit einem flüssigen Wärmeträger betriebenen Heizungssystemen mit

einer Mehrkesselanlage (1) mit mehreren parallelgeschalteten, getrennt schaltbaren Heizkesseln (K1, K2, K3), die jeweils einen Kesseltemperaturfühler (F1, F2, F3) zur Erfassung der Kesseltemperatur (T1, T2, T3), ein Ventil (D1, D2, D3; M1, M2, M3) in der Kesselvorlauf-oder Kesselrücklaufleitung sowie eine Umwälzpumpe (P1, P2, P3) aufweisen,

einem zwischen die Mehrkesselanlage (1) und die Wärmeverbraucher (WV) geschalteten hydraulischen Entkoppler (HE) sowie

mindestens einer elektronischen Regeleinrichtung (ER), welche die der Kesseltemperatur (T1, T2, T3) entsprechenden Ausgangssignale der Kesseltemperaturfühler (F1, F2, F3) erfaßt und auf der Basis einer dem Soll-wert der Vorlauftemperatur ($VT_{SOLL}$) entsprechenden Führungsgröße sowie unter bestimmten Betriebsbedingungen auf der Basis einer dem Istwert der Vorlauftemperatur im Primärkreis der Mehrkesselanlage vor dem hydraulischen Entkoppler (HE) entsprechenden Vorlauftemperatur (VT1) die Kesseltemperatur (T1, T2, T3) der Heizkessel (K1, K2, K3) und gegebenenfalls entsprechende Stellorgane (M) und/oder Pumpen steuert

sowie in Abhängigkeit vom erfaßten Wärmebedarf der Wärmeverbraucher (WV) die Heizkessel (K1, K2, K3) zu- und abschaltet und deren Ventile (D1, D2, D3; M1, M2, M3) und Umwälzpumpen (P1, P2, P3) steuert, insbesondere zur Durchführung des Verfahrens nach den Ansprüchen 1 bis 8,

**dadurch gekennzeichnet,** daß

die elektronische Regeleinrichtung (ER) so ausgebildet ist, daß sie die Vorlauftemperatur (VT1) vor dem hydraulischen Entkoppler (HE) aus den Kesseltemperaturen (T1, T2, T3) der in Betrieb befindlichen, mit geöffnetem Ventil (D1, D2, D3) zugeschalteten Heizkessel (K1, K2, K3) nach einer vorgegebenen mathematischen Beziehung berechnet und als Istwert der Vorlauftemperatur verwendet.

**10.** Vorrichtung nach Anspruch 9, dadurch gekennzeichnet, daß die elektronische Regeleinrichtung (ER) einen Mittelwert aus den Kesseltemperaturen (T1, T2, T3) der zugeschalteten Heizkessel (K1, K2, K3) als Vorlauftemperatur (VT1) berechnet.

**11.** Vorrichtung nach den Ansprüchen 9 und 10, dadurch gekennzeichnet, daß die elektronische Regeleinrichtung (ER), wenn sämtliche Heizkessel (K1, K2, K3) mit gleichem oder näherungsweise gleichem sowie konstantem Durchsatz an Wärmeträger betrieben werden, den arithmetischen Mittelwert der Kesseltemperaturen (T1, T2, T3) der in Betrieb befindlichen, zugeschalteten Heizkessel (K1, K2, K3) als Vorlauftemperatur (VT1) berechnet.

**12.** Vorrichtung nach den Ansprüchen 9 und 10, dadurch gekennzeichnet, daß die elektronische Regeleinrichtung, wenn die Durchsätze der Heizkessel (K1, K2, K3) an Wärmeträger nicht sämtlich gleich oder näherungsweise gleich, jedoch konstant sind, einen gewichteten arithmetischen Mittelwert der Kesseltemperaturen (T1, T2, T3) der in Betrieb befindlichen, zugeschalteten Heizkessel (K1, K2, K3) als Vorlauftemperatur (VT1) berechnet, wobei die Gewichtungsfaktoren dem jeweiligen Verhältnis des Durchsatzes ($\dot{V}1$, $\dot{V}2$ bzw. $\dot{V}3$) des betreffenden Heizkessels an Wärmeträger zum Gesamtdurchsatz ($\dot{V}1 + \dot{V}2 + \dot{V}3$) aller in Betrieb befindlichen zugeschalteten Heizkessel an Wärmeträger entsprechen.

**13.** Vorrichtung nach den Ansprüchen 9 bis 12, dadurch gekennzeichnet, daß die elektronische Regeleinrichtung (ER) die aus den Kesseltemperaturen (T1, T2, T3) der in Betrieb befindlichen, zugeschalteten Heizkessel (K1, K2, K3) berechnete Vorlauftemperatur (VT1) nur dann als Istwert der Vorlauftemperatur verwendet, wenn im Sekundärkreis hinter dem hydraulischen Entkoppler (HE) keine oder näherungsweise keine Leistungsabnahme durch Wärmeverbraucher (WV) vorliegt, und bei Vorliegen einer Leistungsabnahme durch Wärmeverbraucher (WV) die im Sekundärkreis hinter dem hydraulischen Entkoppler (HE) gemessene Vorlauftemperatur (VT2) oder die dem arithmetischen Mittelwert von VT1 und VT2 entsprechende mittlere Vorlauftemperatur (VT) als Istwert der Vorlauftemperatur verwendet.

**14.** Vorrichtung nach Anspruch 13, dadurch gekennzeichnet, daß die elektronische Regeleinrichtung die Umschaltung zwischen der Verwendung der berechneten Vorlauftemperatur (VT1) und der Verwendung der gemessenen Vorlauftemperatur (VT2) bzw. der mittlere Vorlauftemperatur (VT) als Istwert der Vorlauftemperatur aufgrund der folgenden Umschaltkriterien vornimmt:

$VT2 \leqq VT_{SOLL} \geqq VT1$: Verwendung von VT2 bzw. von VT,
$VT2 < VT_{SOLL} < VT1$: Verwendung von VT1,

wobei $VT_{SOLL}$ den Sollwert der Vorlauftemperatur bedeutet,

und die Umschaltung erst erfolgt, wenn das betreffende Umschaltkriterium während einer vorgegebenen Zeitdauer erfüllt ist.

**15.** Vorrichtung nach den Ansprüchen 9 bis 14, dadurch gekennzeichnet, daß die elektronische Regeleinrichtung (ER) aus mehreren elektronischen Regeleinrichtungen (ER1, ER2, ER3) besteht, die jeweils einem der Heizkessel (K1, K2, K3) zugeordnet sind, zumindest die Kesseltemperatur (T1, T2, T3) des betreffenden Heizkessels regeln und ein Master-Slave-System darstellen, wobei die elektronische Regeleinrichtung (ER1) des einen Heizkessels (K1), der bei Betrieb des Heizungssystems stets in Betrieb und hydraulisch zugeschaltet ist, Master-Funktion und die den übrigen Heizkesseln (K2, K3) zugeordneten elektronischen Regeleinrichtungen (ER2, ER3) Slave-Funktion besitzen und die elektronischen Regeleinrichtungen (ER1, ER2, ER3) über ein Bussystem miteinander verbunden sind, über das die Kesseltemperaturen (T2, T3) der Slave-Regeleinrichtungen (ER2, ER3) zur Master-Regeleinrichtung (ER1) übertragen werden, und die Inbetriebnahme bzw. Abschaltung von Heizkesseln (K2, K3) und deren Zuschaltung bzw. Abschaltung über die Umwälzpumpen (P2, P3) und die Ventile (D2, D3) von der Master-Regeleinrichtung (ER1) gesteuert ist, welche die Vorlauftemperatur (VT1) bzw. die mittlere Vorlauftemperatur (VT) berechnet.

**16.** Vorrichtung nach Anspruch 15, dadurch gekennzeichnet, daß die elektronischen Regeleinrichtungen (ER1, ER2, ER3) so ausgebildet sind, daß die Master-Funktion nach vorgegebenen Kriterien von jeder elektronischen Regeleinrichtung (ER1, ER2, ER3) allein übernommen oder von einem externen Computersystem oder durch externe Datenübertragung einer der elektronischen Regeleinrichtungen (ER1,

ER2, ER3) temporär oder dauernd zugeteilt werden kann.

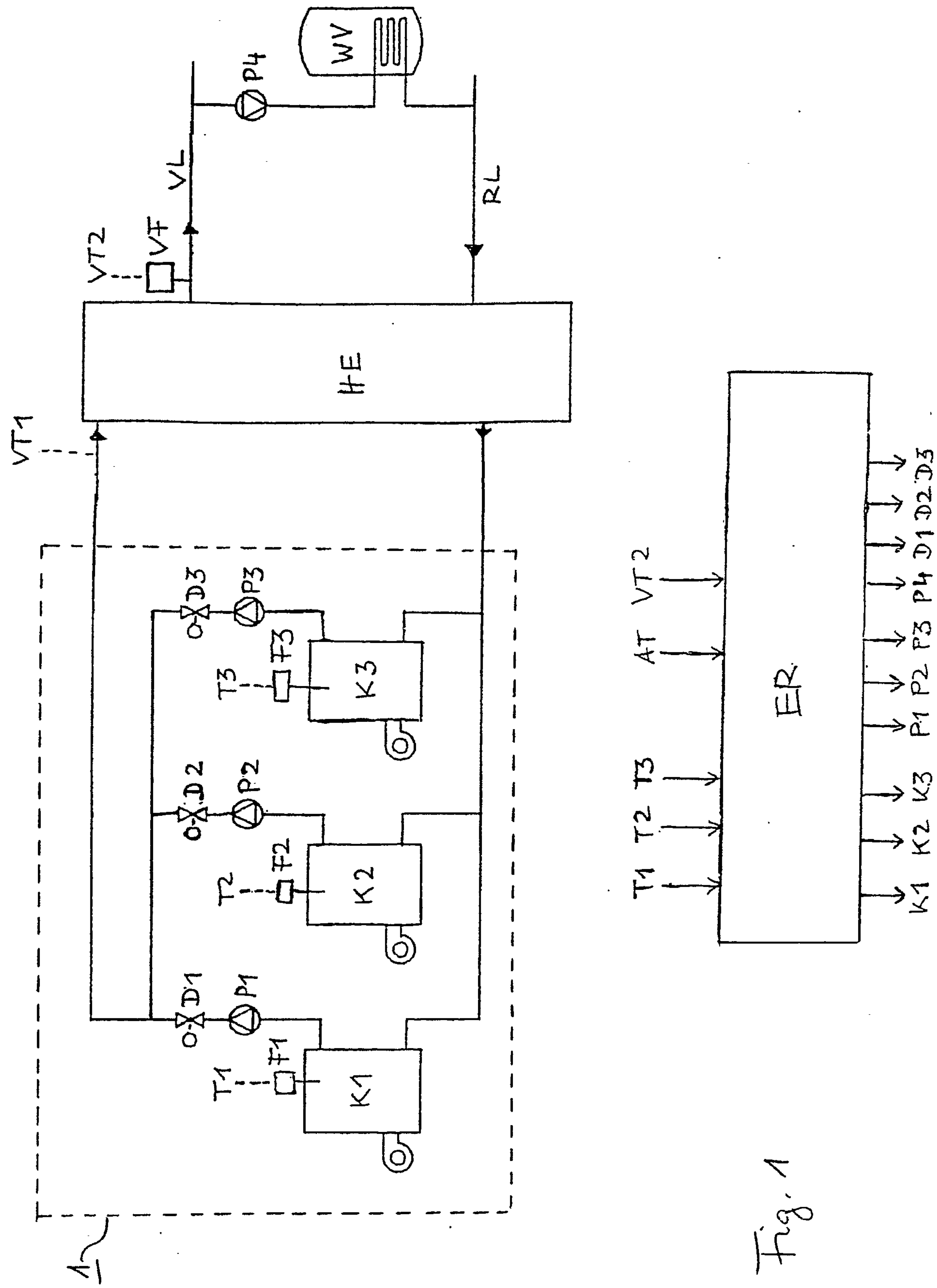
WV
P4
VL
RL
VT2
VF
HE
VT1
D1
P1
T1
F1
K1
D2
P2
T2
F2
K2
D3
P3
T3
F3
K3
1
ER
T1 T2 T3 AT VT2
K1 K2 K3 P1 P2 P3 P4 D1 D2 D3

Fig. 1

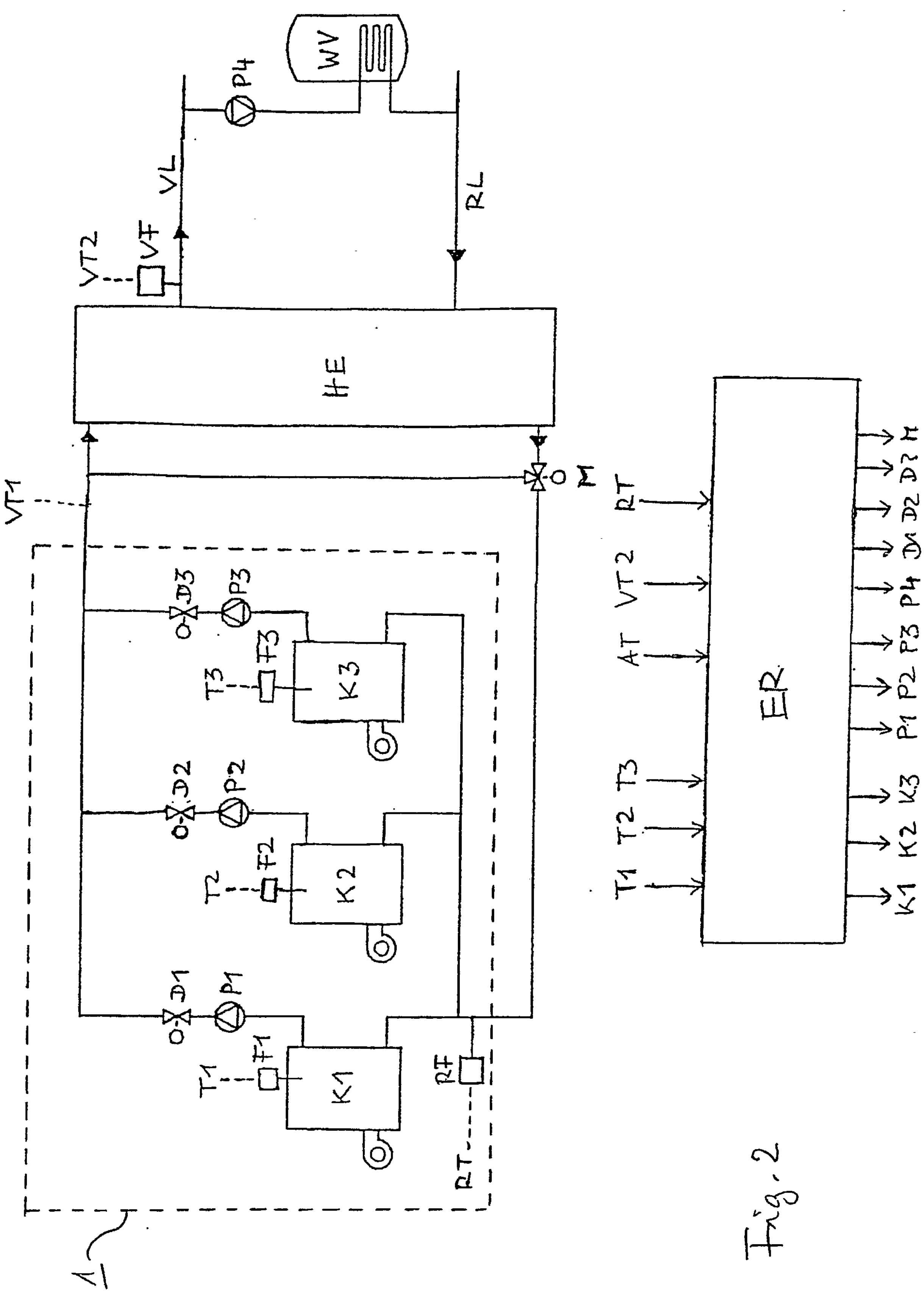
WV
P4
VL
RL
VT2
VF
HE
VT1
M
D3
P3
T3
F3
K3
D2
P2
T2
F2
K2
D1
P1
T1
F1
K1
RF
RT
1
ER
T1 T2 T3
AT
VT 2
RT
K1 K2 K3
P1 P2 P3 P4
D1 D2 D3 M

Fig. 2

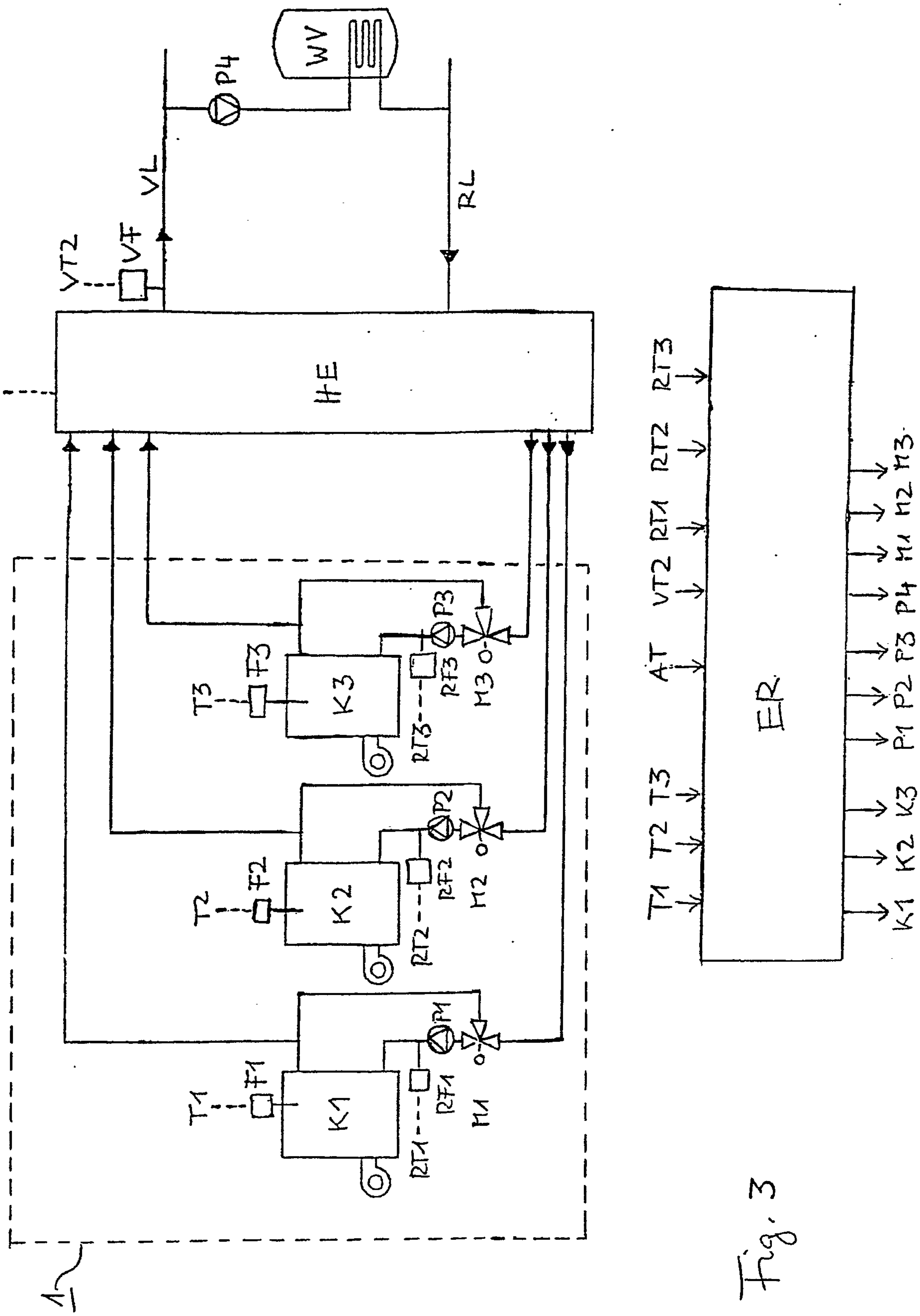

WV
P4
VL
RL
VT2
VF
VT1
HE
T1
F1
K1
RT1
RF1
M1
P1
T2
F2
K2
RT2
RF2
M2
P2
T3
F3
K3
RT3
RF3
M3
P3
1
ER
T1 T2 T3 AT VT2 RT1 RT2 RT3
K1 K2 K3 P1 P2 P3 P4 M1 M2 M3


Fig. 3

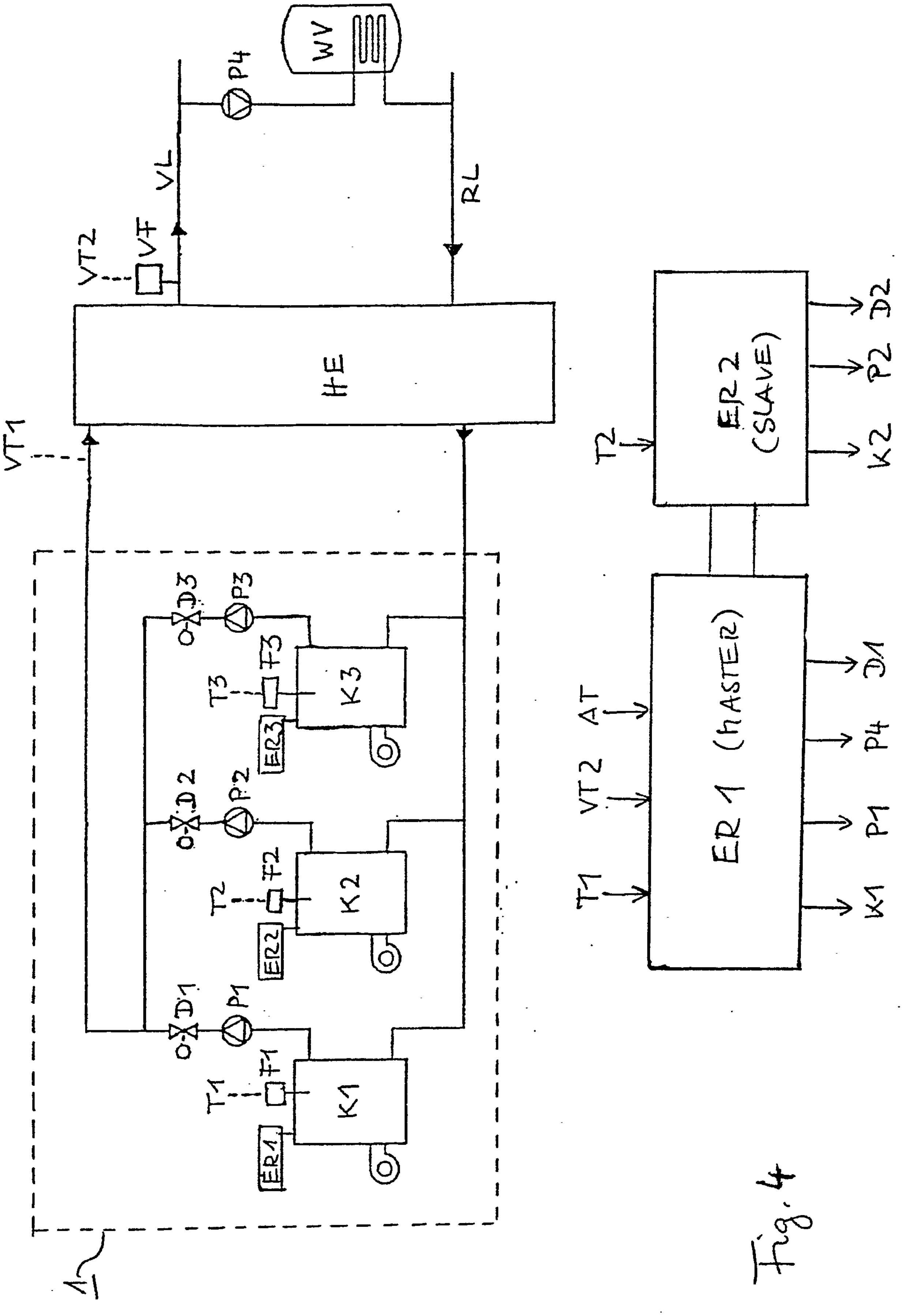
WV
P4
VL
RL
VT2
VF
HE
VT1
D3
P3
F3
T3
K3
ER3
D2
P2
F2
T2
K2
ER2
D1
P1
F1
T1
K1
ER1
1
ER 2 (SLAVE)
T2
K2
P2
D2
ER 1 (MASTER)
T1
VT 2
AT
K1
P1
P4
D1

Fig. 4

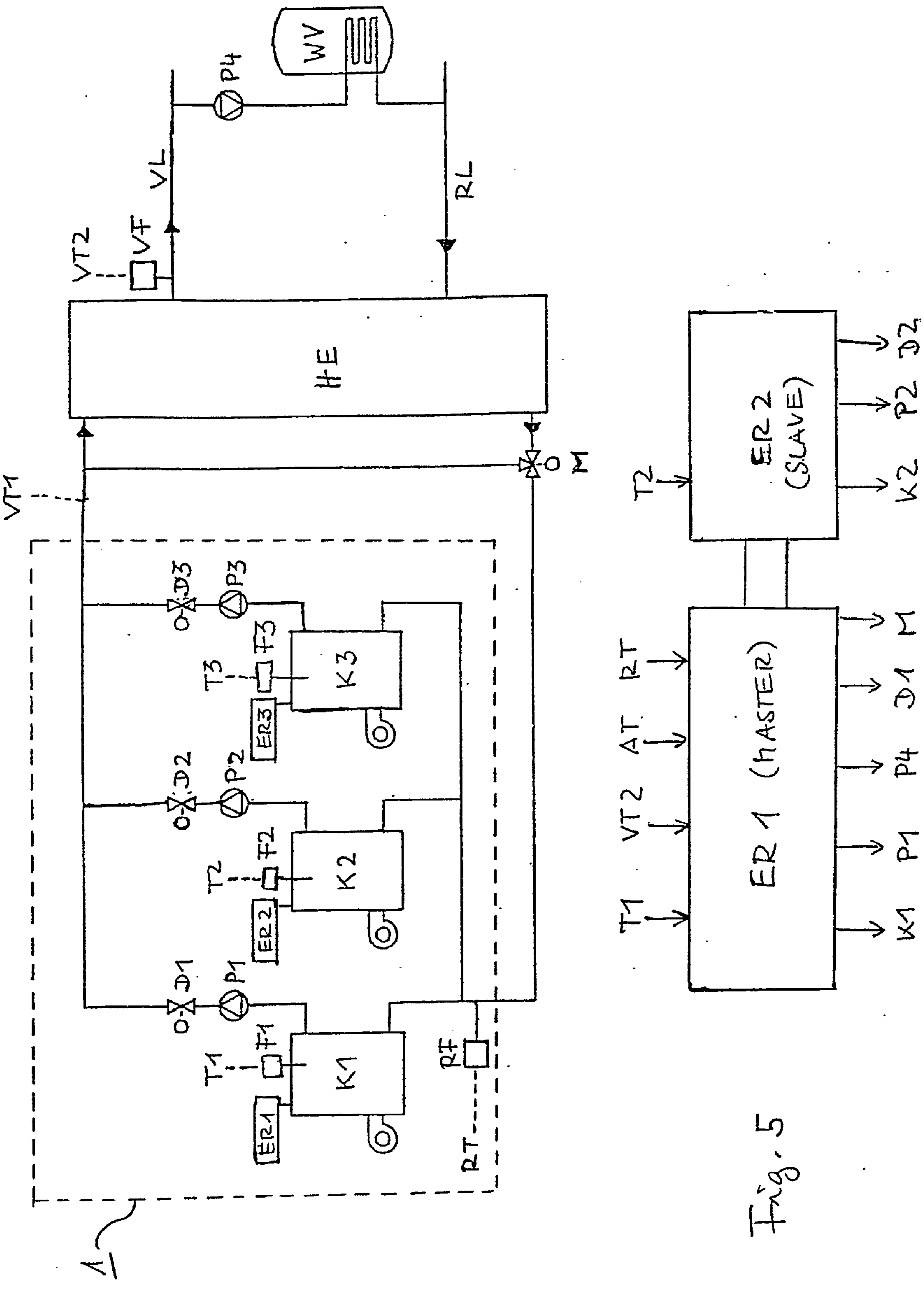

WV
P4
VL
RL
VT2
VF
HE
VT1
M
D1
D2
D3
P1
P2
P3
T1
T2
T3
F1
F2
F3
K1
K2
K3
ER1
ER2
ER3
RF
RT
1
ER 2 (SLAVE)
T2
K2
P2
D2
ER 1 (MASTER)
T1
VT2
AT
RT
K1
P1
P4
D1
M


Fig. 5

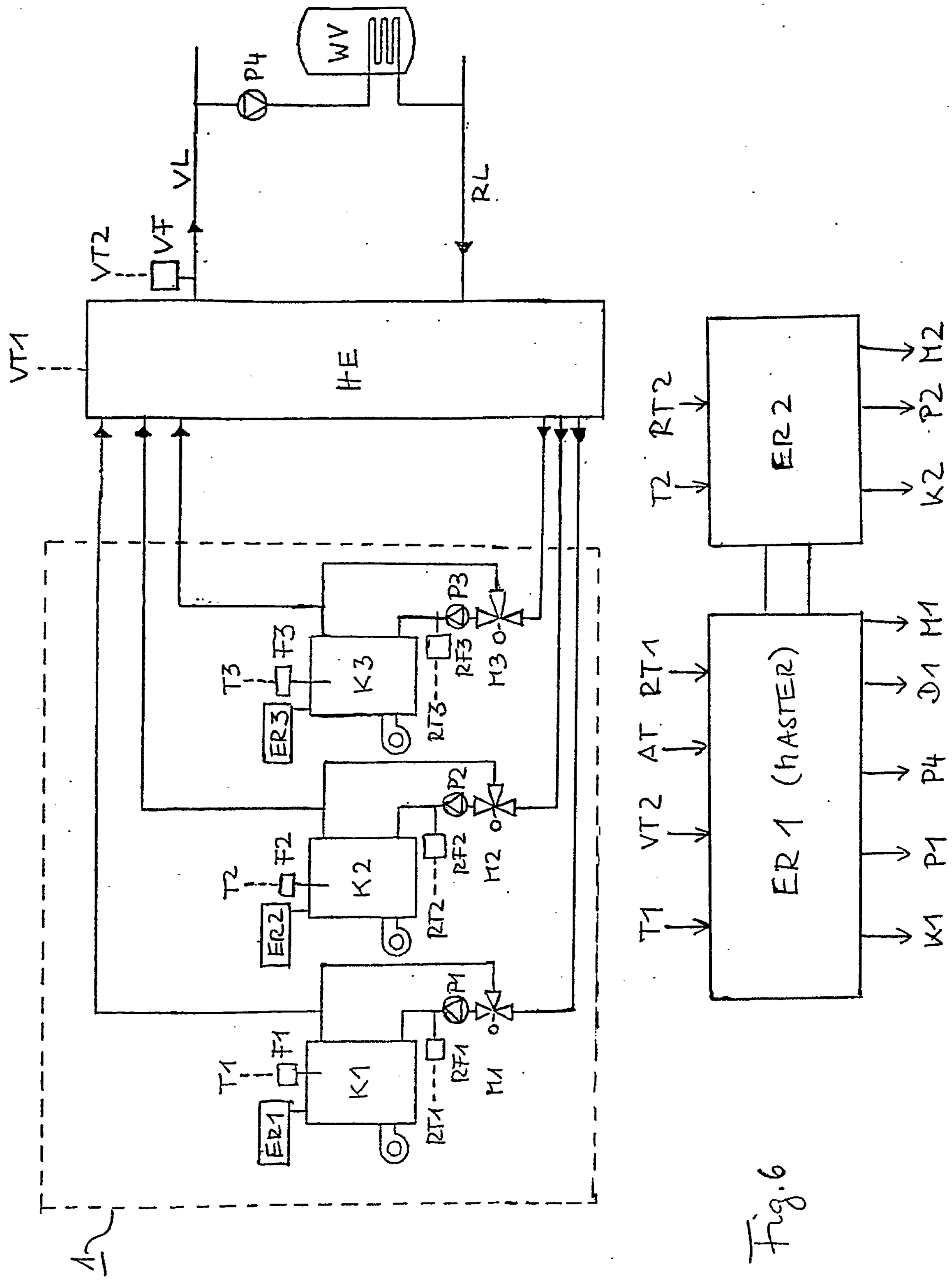
WV
P4
VL
RL
VT2
VF
VT1
HE
ER3
T3
F3
K3
RT3
RF3
P3
M3
ER2
T2
F2
K2
RT2
RF2
P2
M2
ER1
T1
F1
K1
RT1
RF1
P1
M1
1
ER 2
T2
RT2
K2
P2
M2
ER 1 (MASTER)
T1
VT 2
AT
RT1
K1
P1
P4
D1
M1

Fig. 6

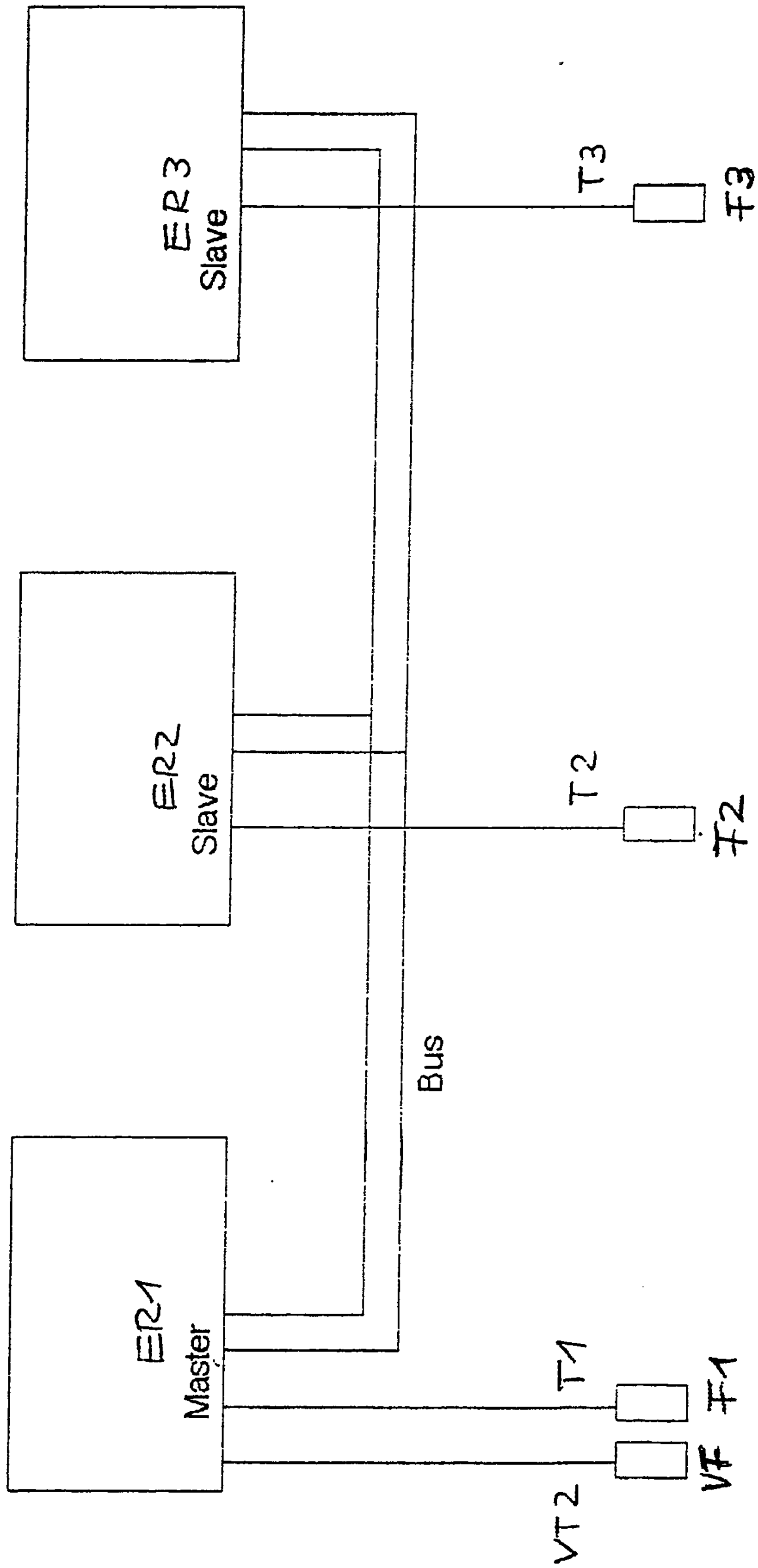


Fig. 7

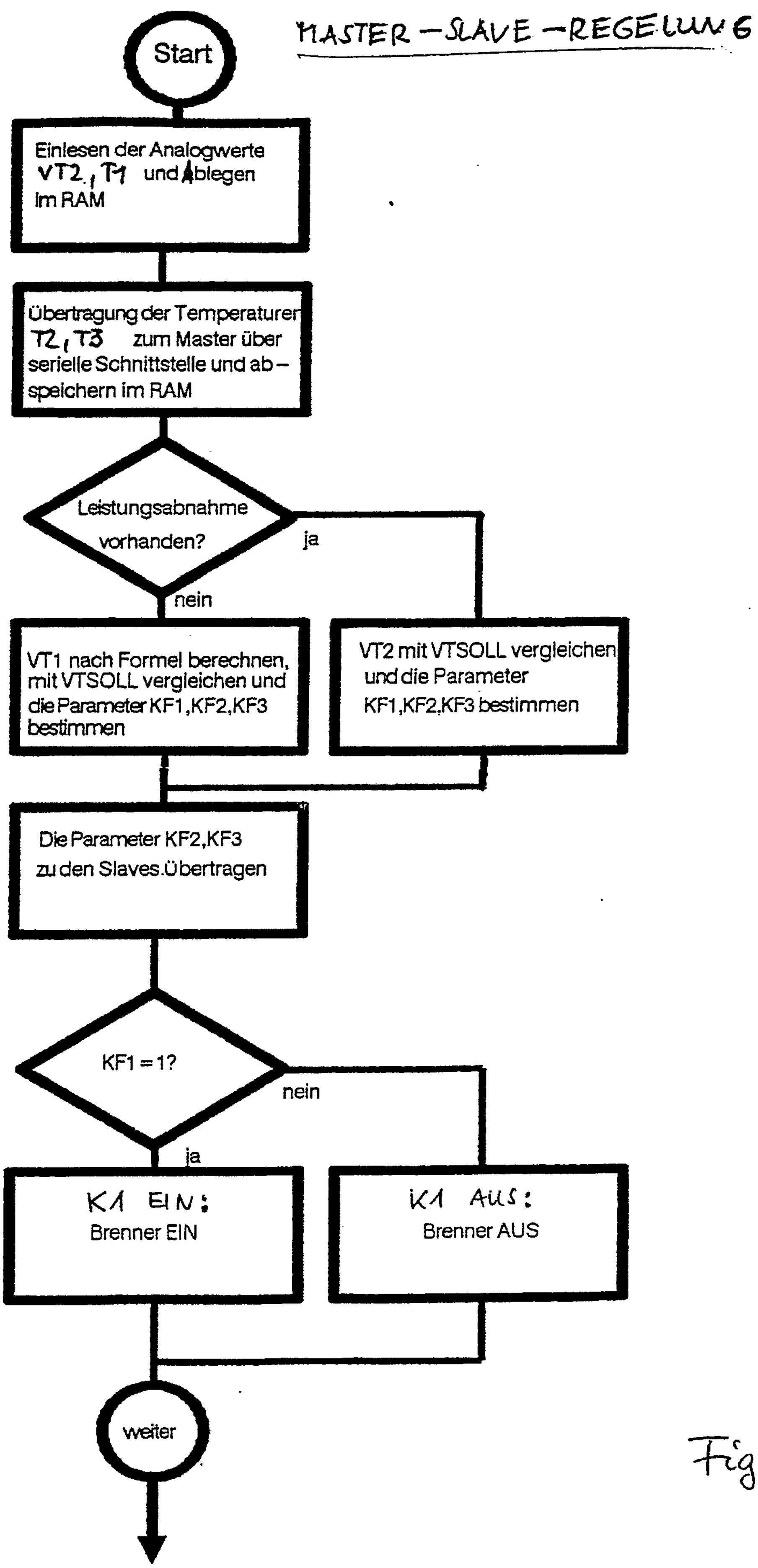
MASTER-SLAVE-REGELUNG
Start
Einlesen der Analogwerte VT2, T1 und Ablegen im RAM
Übertragung der Temperaturen T2, T3 zum Master über serielle Schnittstelle und ab-speichern im RAM
Leistungsabnahme vorhanden?
ja
nein
VT1 nach Formel berechnen, mit VTSOLL vergleichen und die Parameter KF1,KF2,KF3 bestimmen
VT2 mit VTSOLL vergleichen und die Parameter KF1,KF2,KF3 bestimmen
Die Parameter KF2,KF3 zu den Slaves Übertragen
KF1 = 1?
nein
ja
K1 EIN: Brenner EIN
K1 AUS: Brenner AUS
weiter

Fig. 8

## Kaskadenförmige Zu- bzw. Abschaltung der Brennerstufen

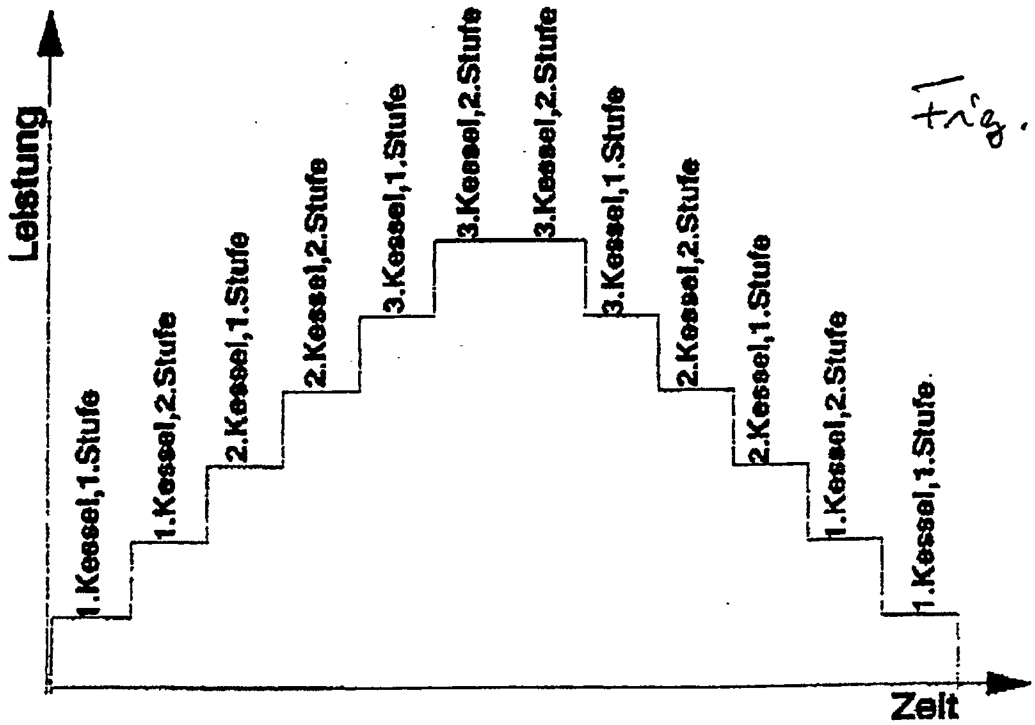


Fig. 9A

## Paralelle Zu- bzw. Abschaltung der Brennerstufen

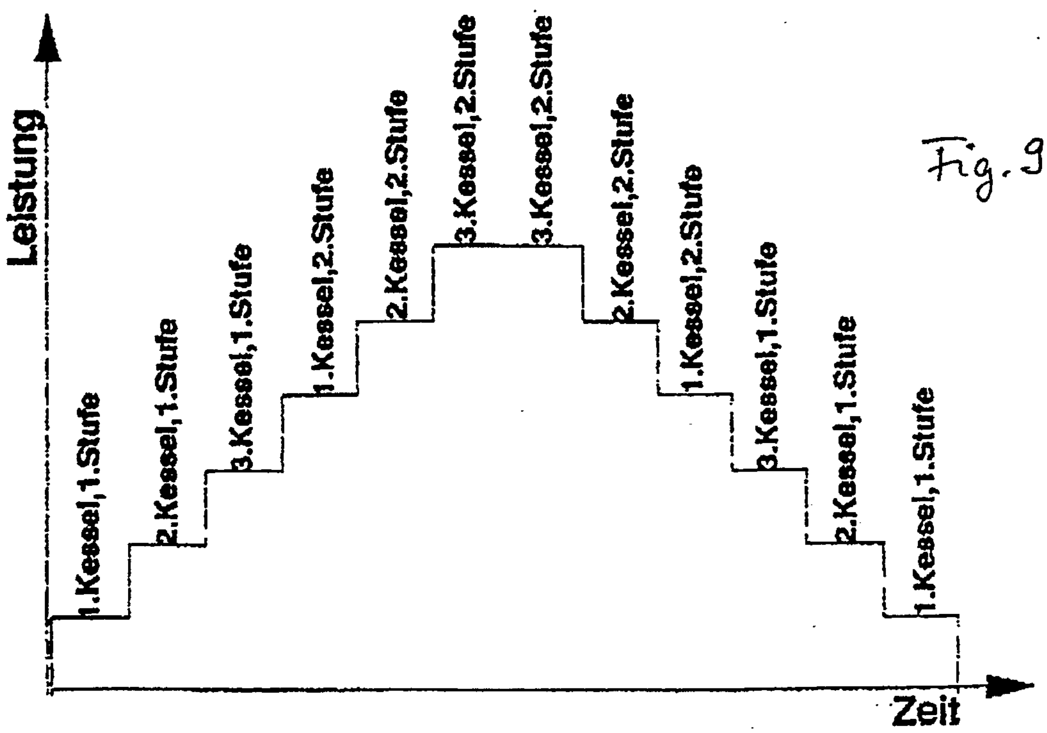


Fig. 9B

Europäisches Patentamt

# EUROPÄISCHER RECHERCHENBERICHT

Nummer der Anmeldung

EP 90 10 2583

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3410316 (JAGER FELIX)<br>* Seite 15, Zeile 3 - Seite 16, Zeile 25; Ansprüche 1-21; Figur 1 * | 1, 9 | G05D23/19<br>F24D12/02 |
| A | KLIMAAT BEHEERSING.<br>vol. 13, no. 6, Juni 1984, DOETINCHEM NL<br>Seiten 154 - 160; A.Kappers: "Volgorderegeling warmte-opwekkers"<br>* das ganze Dokument * | 1, 9 | |
| A | CFP CHAUD FROID PLOMBERIE.<br>vol. 43, no. 509, Dezember 1989, PARIS FR<br>Seiten 81 - 87; Davy De Virville: "mise en cascades de chaudières"<br>* das ganze Dokument * | 1, 9 | |
| A | DE-A-3517902 (LGZ LANDIS)<br>* das ganze Dokument * | 1, 9 | |
| A | DE-A-3715437 (WESTINGHOUSE ELECTRIC CORP.)<br>* Zusammenfassung; Ansprüche 1-13; Figuren 1-11 * | 1, 9 | **RECHERCHIERTE SACHGEBIETE (Int. Cl.5 )**<br>G05D<br>F24D |

Der vorliegende Recherchenbericht wurde für alle Patentansprüche erstellt

| Recherchenort | Abschlußdatum der Recherche | Prüfer |
|---|---|---|
| DEN HAAG | 09 OKTOBER 1990 | SCHOBERT D.A.V. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)